# EUROPEAN PATENT SPECIFICATION

(11) **EP 4 599 796 B1**
(45) Date of publication and mention of the grant of the patent: **23.09.2026**
(21) Application number: 24156774.2
(22) Date of filing: 09.02.2024
(51) Int. Cl.: A61C 17/22, A61H 15/00, B26B 19/38, H02J 7/00

(54) **PERSONAL CARE DEVICE WITH REMOVABLE ENERGY SOURCE**
KÖRPERPFLEGEVORRICHTUNG MIT ABNEHMBARER ENERGIEQUELLE
DISPOSITIF DE SOINS PERSONNELS AVEC SOURCE D'ÉNERGIE AMOVIBLE

(43) Date of publication of application: 13.08.2025
(73) Proprietor: Braun GmbH, 65824 Schwalbach am Taunus (DE)
(72) Inventor: SCHEELE, Jannik, 61476 Kronberg (DE); NICKEL, Luisa, 61476 Kronberg (DE); SCHUPP, Ralf, 61476 Kronberg (DE); NOEL, Eduard, 52134 Herzogenrath/Aachen (DE); SELDERS, Nathalie, 52134 Herzogenrath/Aachen (DE); PFEIFFER, Matthias, 52134 Herzogenrath/Aachen (DE); MENG, Vadim, 52134 Herzogenrath/Aachen (DE); WILDEN, Björn, 52134 Herzogenrath/Aachen (DE)
(74) Representative: P&G Patent Germany

(56) References cited:
- EP-B1- 3 131 495
- WO-A2-2010/106524
- US-A1- 2007 084 002
- US-A1- 2018 206 954
- US-A1- 2022 087 391
- US-A1- 2023 404 726

## Description

### FIELD OF THE INVENTION

The present disclosure is concerned with personal care devices such as electric toothbrushes comprising a removably arrange energy source.

### BACKGROUND OF THE INVENTION

There is a general interest in ensuring that batteries are collectable, recyclable, and reusable, specifically in connection with the European Green Deal. For certain devices such as personal care devices that are used in a bathroom environment, rechargeable batteries had typically been sealed and often were not easily removable from the device. Thus, new personal care devices are envisaged that allow removal of the energy source, e.g., a battery such as a rechargeable accumulator, from the device. For existing devices, there is an interest in providing minimally invasive changes to the device design allowing to remove the battery.

Document WO2010106524A2 shows an electric toothbrush handle with a housing containing a chassis carrying an energy source.

It is thus an object to provide a personal care device having a structure that allows removal of the battery while ideally an existing device design is only changed where really needed.

### SUMMARY OF THE INVENTION

In accordance with at least one aspect a personal care device is provided in accordance with claim 1. The dependent claims define preferred embodiments.

### BRIEF DESCRIPTION OF THE DRAWINGS

The present disclosure will be further elucidated by a detailed description of example embodiments and with reference to figures. In the figures
- Fig. 1: is a depiction of an example embodiment of a personal care device;
- Fig. 2: is a depiction of a chassis holding a removably arranged energy source, which chassis is removed from a cavity of an outer housing after detachment of a closure element from the outer housing;
- Fig. 3: is a depiction of an example holder for holding a removably arranged energy source, the holder typically being a part of a chassis;
- Fig. 4: is a detail depiction of a metal sheet element realizing a first electrical connector partner for getting into non-permanent contact with a first electrical connector of a removable energy source to allow for current flow;
- Fig. 5: is a depiction of an example blocking structure, here realized as a charging coil holder, for being secured at a portion of a chassis;
- Fig. 6: is a depiction of a portion of a chassis holding a removable energy source comprising a blocking structure that is partially bent away after two holder arms were cut;
- Fig. 7A: is a depiction of an example removable energy source comprising a first electrical connector provided for contacting a first electrical connector partner in a longitudinal extension direction of the energy source and a second electrical connector provided for contacting a second electrical connector partner in a direction perpendicular to the longitudinal extension direction of the energy source;
- Fig. 7B: is a perspective view onto the energy source of Fig. 7A, where the second electrical connector is visible in more detail;
- Fig. 8: is a cross sectional cut through an example personal care device at a position where a closure element and an outer housing of the personal care device are locked at each other; and
- Fig. 9: is a depiction of an example part of a chassis such as the backside of a printed circuit board comprising a second electrical connector partner realized as a conductive layer such as a gold-plated conductive layer.

### DETAILED DESCRIPTION OF THE INVENTION

In the context of the present description "personal care" shall mean the nurture (or care) of the skin and of its adnexa (i.e. hairs and nails) and of the teeth and the oral cavity (including the tongue, the gums etc.), where the aim is on the one hand the prevention of illnesses and the maintenance and strengthening of health and on the other hand the cosmetic treatment and improvement of the appearance of the skin and its adnexa. It shall include the maintenance and strengthening of wellbeing. This includes skin care, hair care, and oral care as well as nail care. This further includes grooming activities such as beard care, shaving, and depilation. A "personal care device" thus means any device for performing such nurturing or grooming activity, e.g. (cosmetic) skin treatment devices such as skin massage devices or skin brushes; wet razors; electric shavers or trimmers; electric epilators; and oral care devices such as manual or electric toothbrushes, (electric) flossers, (electric) irrigators, (electric) tongue cleaners, or (electric) gum massagers. This shall not exclude that the proposed personal care device may have a more pronounced benefit in one or several of these nurturing or device areas than in one or several other of these areas. In the present description, an electric toothbrush was chosen to present details of the proposed personal care device, which shall be understood as not limiting. To the extent in which the details are not specific for an electric toothbrush, the proposed technology can be used in any other personal care device.

A personal care device may generally comprise a handle for allowing a user to hold the personal care device in a hand and a head for performing a care action at a care site. E.g., in case of an electric toothbrush, the head may be realized as a brush head for brushing teeth of the dentition. The head may be repeatedly detachable and again attachable to the handle. The handle may comprise an outer housing and a closure element that is detachable from the outer housing. The personal care device comprises a cavity, e.g., a cavity within the outer housing, for accommodating a chassis. The chassis is holding a removable energy source. The chassis may comprise a holder for only holding the energy source. The chassis may comprise further functional elements of the personal care device such as a drive, control electronics, a drive shaft, sensors, switches etc. In particular, the chassis may be the complete functional device structure so that after removal of the chassis, the cavity is empty.

In the context of the present disclosure, the term "energy source" shall refer to a removable energy source if not otherwise indicated. The term "removable" shall indicate that the energy source itself is non-destructively removable from the personal care device, specifically from the chassis by a user or by untrained service personnel. This shall not exclude that some element of the personal care device needs to be severed to remove the energy source. In some embodiments, the energy source can only be removed by using a tool, e.g., in some examples some pliers may be needed to cut through at least one holder arm of a blocking structure to bend away at least a portion of the blocking structure to thus clear the way for removal of the energy source.

In accordance with the invention discussed in the present disclosure, a personal care device such as an electric toothbrush comprises an outer housing having an inner cavity that may typically span the complete length of the outer housing in which a chassis is disposed that holds the removable energy source. In order to allow access to the chassis, the ouster housing is closed with a closure element that is arranged to be detachable, e.g., under a rotary motion. The closure element may be provided at a bottom or a top of a handle of the personal care device, where "top" refers to an end of the handle proximal the head and "bottom" refers to an end of the handle distal to the handle. The interface between the closure element and the outer housing may be structured to seal the cavity against inflow of liquids. The chassis at least holds the removable energy source, e.g., the chassis itself may be a holder for holding the removable energy source. An elastic element such as a coil spring may be placed between the closure element or some portion of the outer housing and the energy source to keep the energy source in place while the closure element is attached to the outer housing. The chassis is intended for removal from the outer housing along a chassis removal direction that typically coincides with a longitudinal extension direction or center axis of the outer housing, which removal action can be done by a user or by untrained service personnel once the closure element is removed. The energy source is arranged for being removable from the chassis along an energy source removal direction. This energy source removal direction may coincide with a longitudinal extension direction or center axis of the chassis.

The energy source has a first electrical connector and a second electrical connector, where the first electrical connector is non-permanently coupled with a first electrical connector partner secured at the chassis and the second electrical connector is non-permanently coupled with a second electrical connector partner secured at the chassis so that a current flow is enabled from the energy source to any energy consumer(s) of the personal care device such as a drive or control electronics or sensors. These first and second pairs of electrical connectors also serve to allow a charging current to be fed to the energy source. The first and/or the second electrical connector of the energy source may comprise at least one spring-loaded arm, which spring-loaded arm may have a nub-like or dome-like projection for contacting the respective electrical connector partner. Such a nub or dome effectively avoids that any remaining punching burr contacts the respective electrical connector partner. Due to the non-permanent coupling of the connector partners, accelerated motion of the device or mechanical shock may lead to motion between the electrical contact partners and thus to mechanical wear, which could become considerable in case of non-smooth connector partners. The respective electrical contact partner for the spring-loaded arm connector may be a conductive layer such as a gold-plated conductive layer. At least one of the first or second electrical connectors or of the first or second electrical connector partners may be coated with a grease to reduce corrosion and/or contamination effects, or it may be coated with a conductive grease, which may in addition improve the contact between non-permanently coupled electrical connector pairs. The first and/or the second electrical connector partner may be realized as a metal sheet element made from a conductive metal sheet. The metal sheet element may be locked at the chassis, e.g., by means of at least one locking element such as one or more snap hooks that lock the metal sheet at the chassis. The metal sheet element may comprise integral elements made by cutting, stamping and bending operations. These elements may comprise at least one nub-like or dome-like contact element or at least one spring-loaded contact arm. Other such elements being integral with the metal sheet element may comprise at least one connector arm for establishing an electrical connection with a conducting wire or with a printed wire on a printed circuit board, and/or one or more abutting elements for defining a position of the metal sheet element with respect to the chassis.

In accordance with the claimed invention, the first electrical connector may contact the first electrical connector partner in the longitudinal extension direction of the energy source and the second electrical connector may contact the second electrical connector partner in a direction that is perpendicular to the longitudinal extension direction so that the two contacting directions are about 90 degrees apart. Specifically, the contacting between the first electrical connector and the first electrical connector partner may then be enforced by a biasing element such as a coil spring pushing against the energy source in the longitudinal extension direction. The second electrical connector and the second electrical connector partner may then get into contact in a sliding manner in the longitudinal extension direction and due to a spring force in the direction perpendicular to the longitudinal extension direction. The sliding contact under spring pressure may then withstand accelerations and shocks during the use of the personal care device so that the electrical contact is effectively maintained even under such mechanically difficult circumstances.

In accordance with the claimed invention, the chassis comprises a blocking structure that blocks the way for removing the energy source from the chassis along the energy source removal direction. In the assembled state, the blocking structure may be arranged between the energy source and the closure element or between the energy source and a portion of the outer housing. The blocking structure comprises at least one holder arm that is provided for a severance cut through a neck section of the holder arm so that after the severance cut at least a portion of the blocking structure can be bent away for clearing the way for removing the energy source from the chassis along the energy source removal direction. The blocking structure may be a charging coil holder. In an assembly step, the blocking structure may need to provide a certain stability for enabling a controlled assembly process. While the blocking structure may comprise a pivot around which a portion of the blocking structure can be pivoted away, it is not necessary to provide a dedicated pivot or hinge if after the severance cut the blocking portion of the blocking structure can be bend away to clear the way for removal of the energy source from the chassis.

The neck section of the at least one holder arm comprises at least two oppositely arranged groove-like structures for guiding a tool for performing the severance cut. As will be explained in more detail further below, the cross-sectional area of the neck section to be cut may be limited to not more than 4 mm² and/or the material may be a thermoplastic.

The closure element may be detachable from the outer housing by means of a rotary motion. The closure element and the outer housing may be mechanically coupled by at least one pair of interacting mechanical elements such as a projection and a receptacle. The projection and/or the receptacle may have a ramp or chamfer to support the detachment of the closure element from the outer housing when the closure element is rotated against the outer housing. Specifically, the closure element and the outer housing may be locked at each other by two pairs of interacting mechanical elements. In some embodiments, the closure element may be detachable from the outer housing by squeezing the outer housing to decouple mechanically engaged interaction elements such as a projection and a receptacle. The closure element may then be detached by a tilting motion of the closure element relative to the outer housing, while the outer housing is being squeezed together. In case of two pairs of mechanically interacting elements, the squeezing and tilting may need to be repeated for a complete detachment.

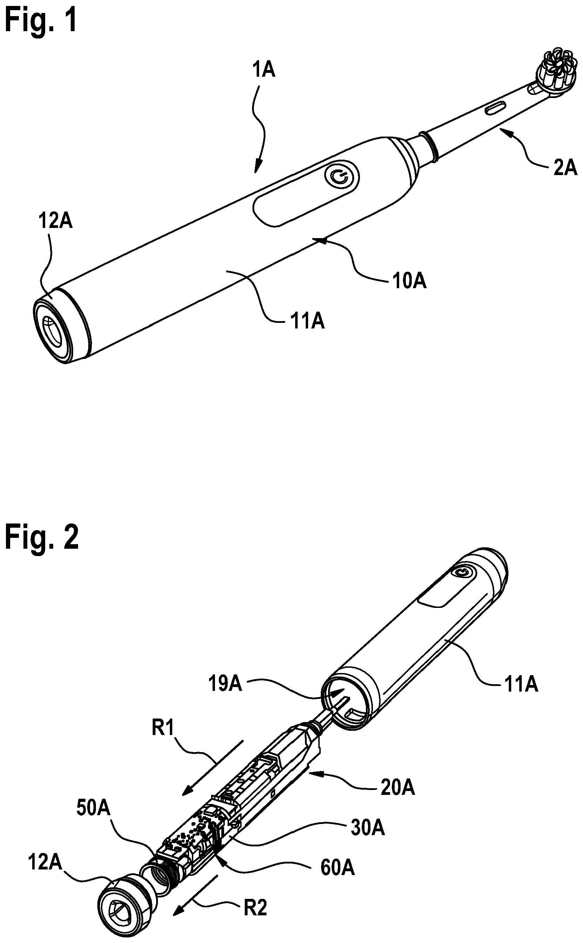

Fig. 1 is a depiction of an example personal care device 1A realized as an electric toothbrush. The personal care device 1A comprises a handle 10A and a head 2A, here realized as a detachable brush head. The handle 10A comprises an outer housing 11A and a detachable closure element 12A.

Fig. 2 is a depiction of the outer housing 11A and the closure element 12A shown in Fig. 1. A chassis 20A is shown in a state where it was already removed from a cavity 19A defined by the outer housing 11A. In the shown example, the chassis 20A is a multi-component part comprising various elements such as a holder 30A for a removable energy source 60A, a printed circuit board, a motor, a drive shaft, a blocking structure 50A such as a charging coil holder etc. The chassis 20A has been removed from the cavity 19A along a chassis removal direction R1. The removable energy source 60A is arranged for removal from the chassis 20A along an energy source removal direction R2. It can be appreciated that the blocking structure 50A blocks the way for the removal of the removable energy source 60A.

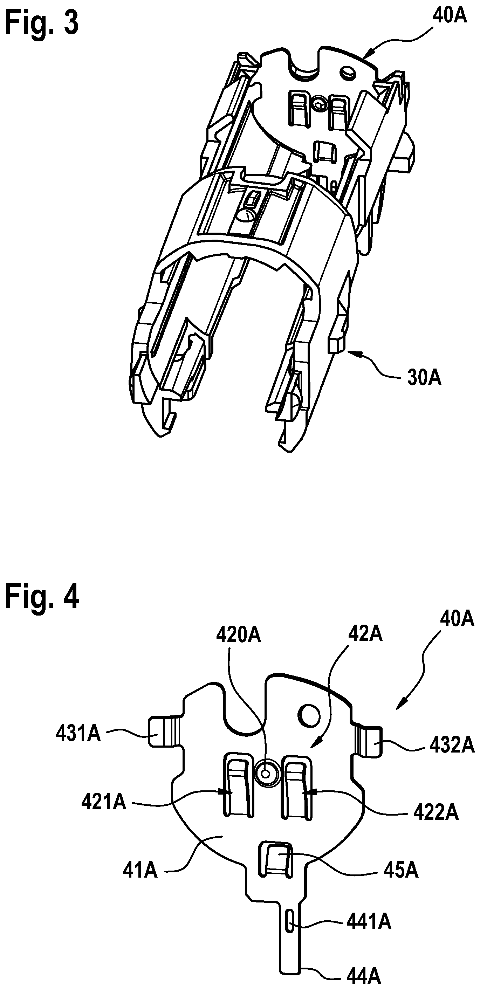

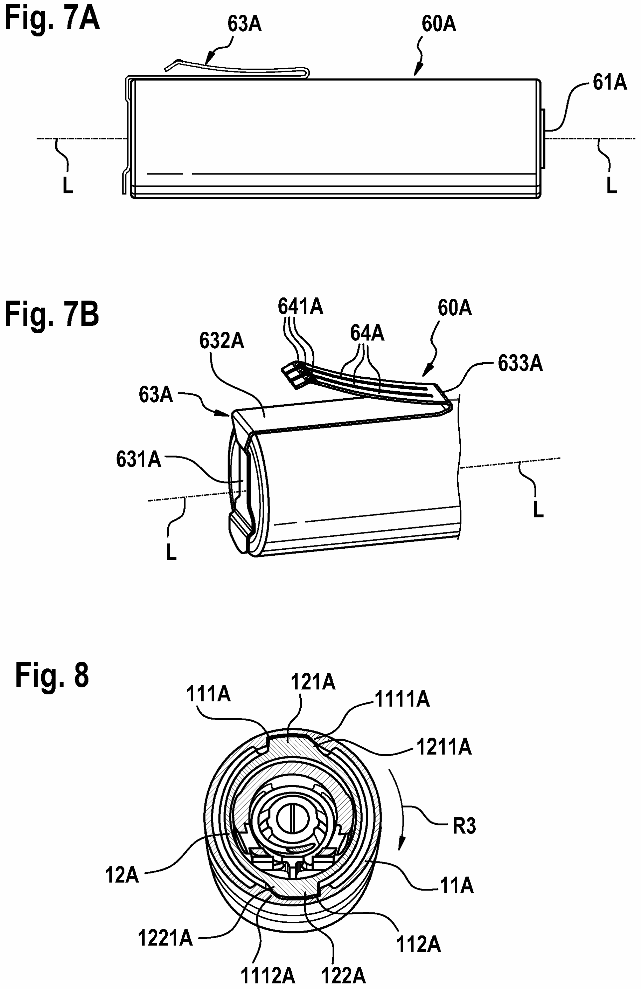

Fig. 3 is a depiction of a holder 30A for holding a removable arranged energy source. The holder 30A may be a part of a chassis such as the chassis 20A shown in Fig. 2. The holder 30A may be a plastic part, specifically an injection molded plastic part. A first electrical connector partner 40A is secured at the holder 30A for contacting a first electrical connector of the removable energy source (see, e.g., a first electrical connector 61A in Fig. 7A). The details of the first electrical connector partner are discussed in the following paragraph with reference to Fig. 4.

Fig. 4 is a magnified and isolated depiction of the first electrical connector partner 40A shown in Fig. 3. The first electrical connector partner 40A is here realized as a conductive metal sheet element. The metal sheet element may be gold-plated or otherwise coated for improved corrosion properties and reduced contact resistance. The first electrical connector partner 40A has a base metal sheet 41A and an electrical contact area 42A. The electrical contact area 42A may comprise at least one nub-like or dome-like contact element 420A that may be centrally arranged. In addition to the nub-like or dome-like contact element 420A, the first electrical connector partner 40A may comprise at least one spring-loaded contact arm 421A, 422A. In case of two spring-loaded contact arms 421A and 422A as in the shown example, these contact arms 421A, 422A may be symmetrically arranged with respect to the central nub-like or dome-like contact element 420A. It had been found that in case that an energy source is removably arranged in a chassis of a personal care device (i.e., where the electrical contacts are non-permanently coupled and rely on pressure and friction between the contact partners rather than a solder material or the like), a combination of one or more fixed contact element(s) and of one or more elastic contact element(s) can typically deal better with vibrations and shocks of the personal care device during use than just one single type of contact element. At least one of the at least one spring-loaded contact arms 421A, 422A may have a nub-like or dome-like contact projection or may - as is shown - have a line-like contact protrusion, which may be made by a stamping and/or bending operation. The first electrical connector partner 40A may comprise at least one of the following further elements:
(a) one or more stopper arms or abutting elements or projections or edges 431A, 432A for providing a stopper functionality in an automated mounting process when the first electrical connector partner 40A is secured at the chassis, e.g., at a holder of the chassis for holding the removable energy source,
(b) an electrical connector element 44A that may comprise a cut-out 441A for easier bending and/or for improved soldering, which electrical connector element 44A may be used for establishing a conductive connection with a wire of the device electronics, and
(c) at least one snap hook 45A that in a mounting process non-detachably locks the first electrical connector partner 40A at the chassis, where non-detachably here refers to the fact that after snapping into a receptacle or the like, the snap hook 45A needs to be manually bent to allow removal of the first electrical connector partner 40A. In an example as shown, all the mentioned elements of the first electrical connector partner 40A may be made out the same single metal sheet by cutting, stamping, and bending operations.

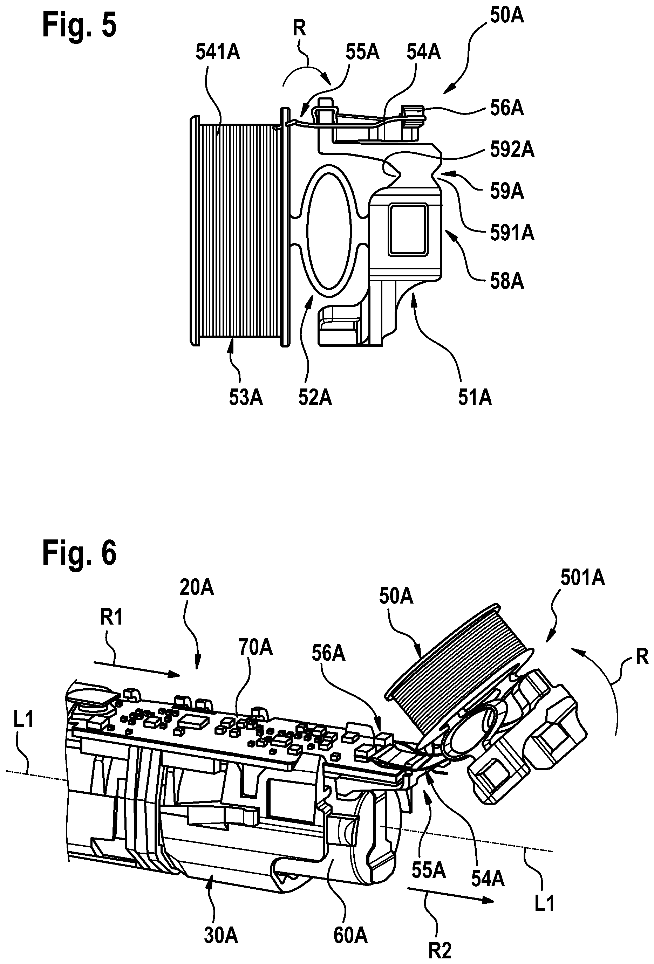

Fig. 5 is a side view onto an example blocking structure 50A that may be located between the removably arranged energy source and the closure element in the assembled state of the personal care device and thus, even after removal of the chassis from the outer housing, the removal of the energy source along the energy source removal direction is inhibited by the blocking structure 50A. The blocking structure 50A is in the shown example a holder structure holding a charging coil 541A. In detail, the blocking structure 50A here comprises a first portion 51A that introduces the necessary stability of the blocking structure 50A during the assembly process, an elastic portion 52A that compensates tolerances, and a coil bobbin portion 53A onto which the coil 541A is wound. The first portion 51A is intended for being secured at the chassis, in particular at a printed circuit board of the chassis, by means of a connector 56A onto which also a wire 54A is loosely wound that then bridges over to the coil bobbin portion 53A. The blocking structure 50A comprises at least one holder arm 58A (here being a part of the first portion 51A) that in turn has a neck section 59A having at least two groove-like structures 591A and 592A that together shape the neck section in a way that jaws of a pliers or a wire cutter or another pliers-like tool are guided towards the thinnest portion of the neck section 59A. As can be seen in Fig. 6, the first portion 51A may be ring-shaped and thus the first portion may have two oppositely arranged neck sections at two holder arms, even though the number of neck section is neither linked to the number of holder arms nor the shown embodiment. In general, the blocking structure may comprise one or two or even more holder arms and each of the holder arms may comprise one or two or even more neck sections. The neck section may also be round and then a circumferential groove may provide the function of two opposing groove-like structures. The above discussion shall not exclude that a holder arm may comprise a neck section that has only one groove-like structure.

The shown detailed example may be sensible for an existing design of a personal care device that previously comprised a blocking structure so that removal of an energy source located "behind" the blocking structure was inhibited. Removal of the energy source may not have originally be foreseen. In the context of modifying such an existing blocking structure, it was found that the smallest cross-sectional area of the neck section to be cut and the material of the holder arm might be chosen such that any user can cut through the neck section without considerable difficulties. To achieve this, the cross-sectional area of the neck section may be chosen to be not larger than 4mm² or not larger than 3.5mm² or not larger than 3mm² or may be chosen to be about 2.75mm² or even smaller. A balance should be found between the stability of the blocking structure 50A in an assembly process which is to some extent governed by the cross-sectional area of the neck section and the ease of cutting through the neck section. Therefore, the cross-sectional area should not become too small. It was further found that the mentioned cross-sectional area may go along with the material of the holder arm 58A being a thermoplastic. While it shall not be excluded that the holder arm 58A is made from another material such as metal, it was found that the combination of the mentioned cross-sectional area and a thermoplastic as material enables a relatively easy cutting action while providing sufficient stability to the blocking structure 50A.

Fig. 6 is a depiction of a portion of the chassis 20A holding the energy source 60A in a holder 30A. The previously discussed blocking element 50A is shown in a state where the previously mentioned severance cuts through two holder arms (reference numeral 58A in Fig. 5) were performed and a blocking portion 501A of the blocking structure 50A is now in a bent-away position allowing the removal of the removably arranged energy source 60A along an energy source removal direction R2 that is about parallel with a longitudinal axis L1 of the chassis 20A and also essentially coinciding with the chassis removal direction R1 along which the chassis 20A was removed from the cavity of the outer housing of the personal care device as discussed in a previous paragraph. The blocking structure 50A is secured at a printed circuit board 70A by means of the connector 56A. In the current example, the blocking structure 50A does not have a dedicated hinge about which the blocking portion 501A of the blocking structure 50A can pivot, but the wires 54A spanning between the remaining chassis 20A and the blocking portion 501A of the blocking structure provides for a flexible area 55A that allows a bending-away motion as is indicated by arrow R. As the removable energy source 60A is only non-permanently connected with the chassis 20A, the energy source 60A can be removed from the chassis after the blocking portion 501A is bent away.

Fig. 7A is a side-view depiction of an example removable energy source 60A that has a first electrical connector 61A and a second electrical connector 63A. The first electrical connector 61A is arranged in a longitudinal direction or axial direction L, while the second electrical connector 63A is provided in a radial direction essentially perpendicular to the longitudinal direction L.

Fig. 7B is a detailed perpendicular view onto a portion of the energy source 60A shown in Fig. 7A. The example second electrical connector 63A as shown comprises various parts discussed in the following. The second electrical connector 63A may be made from a sheet of conductive metal. The second electrical connector 63A has a connecting portion 631A that may be welded or otherwise secured at the body of energy source 60A, typically at a plus pole or minus pole of the energy source 60A. The electrical connector 63A then is bent by 90 degrees and continues as a portion 632A extending along the longitudinal direction L until a bending section 633A at which the second electrical connector 63A is bent by somewhat less than 180 degrees. The conductive sheet metal of the second electrical connector 63A is then split into three parallel spring-loaded arms 64A that are intended to contact a second electrical connector partner. For reduction of mechanical interaction between the spring-loaded arms 64A and the second electrical connector partner due to, e.g., punching burrs, each spring-loaded arm 64A may comprise at least one nub-like or dome-like contact element 641A.

Fig. 8 shows a cross-sectional cut through an example personal care device at a level at which an outer housing 11A and a closure element 12A mechanically engage with each other. As previously indicated, the closure element 12A is here intended for detachment from the outer housing 11A by a rotary motion against the outer housing 11A as is indicated by arrow R3. The closure element 12A comprises two oppositely arranged projections 121A and 122A that each comprise a ramp 1211A and 1221A, respectively. The projections 121A and 122A are received by receptacles 111A and 112A, respectively. The receptacle 111A comprises a ramp 1111A that interacts with the ramp 1211A when the closure element 12A is moved in direction R3, and the receptacle 112A comprises a ramp 1121A that interacts with the ramp 1221A when the closure element 12A is moved in direction R3.

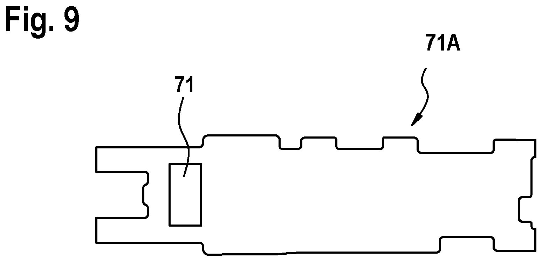

Fig. 9 is a depiction of an example portion 70A of a chassis, which portion 70A may be a printed circuit board, at which a second electrical connector partner 71A is provided, which second electrical connector partner 71A may be realized as a conductive layer, e.g., as a gold-plated conductive layer.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A personal care device (1A) having an energy source (60A) arranged for being removable, the personal care device (1A) comprising:
an outer housing (11A) having a detachable closure element (12A) at one end, the detachable closure element (12A) enabling access to a cavity (19A) of the outer housing (11A) after detachment;
a chassis (20A) disposed in the cavity (19A) of the outer housing (11A), the chassis (20A) holding the energy source (60A);
the chassis (20A) comprising a blocking structure (50A) such as a charging coil holder positioned between the energy source (60A) and the closure element (12A) along an energy source removal direction (R2);
the energy source (60A) having a first electrical connector (61A) non-permanently coupled with a first electrical connector partner (40A) and a second electrical connector (63A) non-permanently coupled with a second electrical connector partner, the first electrical connector partner (40A) and the second electrical connector partner being secured at the chassis (20A);
the chassis (20A) being arranged for removal from the cavity (19A) of the outer housing (11A) along a chassis removal direction (R1) when the closure element (12A) is detached; and
the blocking structure (50A) comprising at least one holder arm (58A) with a neck section (59A) provided for a severance cut so that the blocking structure (50A) can be bent away after the severance cut to allow removing the energy source (60A) from the chassis (20A);
**characterized in that** the neck section (59A) comprises at least two opposing groove-like structures (591A, 592A) for guiding a tool for performing the severance cut.

2. The personal care device in accordance with claim 1, wherein the neck section (59A) comprises three groove-like structures.

3. The personal care device in accordance with one of claim 1 or claim 2, wherein the cross-sectional area of the neck section (59A) is below about 4 mm² and the material of the at least one holder arm (58A) is a thermoplastic.

4. The personal care device in accordance with one of claims 1 to 3, wherein the first electrical connector partner (40A) is a metal sheet element that is secured at the chassis (20A).

5. The personal care device in accordance with claim 4, wherein the metal sheet element (40A) has a metal snap hook (45A) locking the metal sheet element (40A) at the chassis (20A).

6. The personal care device in accordance with claim 4 or claim 5, wherein the metal sheet element (40A) has at least one spring-loaded contact arm (421A; 422A) and at least one nub-like or dome-like contact structure (420A).

7. The personal care device in accordance with one of claims 1 to 6, wherein the second electrical connector (63A) is realized as at least one spring-loaded arm (64A), specifically as a plurality of spring-loaded arms (64A), in particular where the at least one spring-loaded arm (64A) contacts the second electrical connector partner in a direction perpendicular to the energy source removal direction (R2).

8. The personal care device in accordance with claim 7, wherein the at least one spring-loaded arm (64A) has at least one nub-like contact structure (641A) being in contact with the second electrical connector partner.

9. The personal care device in accordance with claim 6 or claim 7, wherein the second electrical connector partner is a contact surface such as a gold-plated conductive layer.

10. The personal care device in accordance with one of claims 1 to 9, wherein the first electrical connector (61A) and/or the second electrical connector (63A) is coated with a grease, in particular a conductive grease.

11. The personal care device in accordance with one of claims 1 to 10, wherein the first electrical connector (61A) is contacting the first electrical contact partner (40A) in a longitudinal extension direction of the energy source (60A) and the second electrical connector (63A) is contacting the second electrical contact partner in a direction perpendicular to the longitudinal extension direction so that the two contacting directions are about 90 degrees apart.

12. The personal care device in accordance with one of claims 1 to 11, wherein the closure element (12A) is arranged for detachment from the outer housing (11A) by a rotary motion with respect to the outer housing (11A) and the closure element (12A) and the outer housing (11A) are locked at each other by at least one engaged projection (121A) and receptacle 111A) pair, specifically where the projection (121A) has a chamfer (1211A), and the receptacle (111A) has a cooperating chamfer (1111A) to support the detachment in the rotary motion direction (R3).

## Patentansprüche

1. Körperpflegevorrichtung (1A), die eine Energiequelle (60A) aufweist, die entnehmbar arrangiert ist, die Körperpflegevorrichtung (1A) umfassend:
ein äußeres Gehäuse (11A), das ein ablösbares Verschlusselement (12A) an einem Ende aufweist, wobei das ablösbare Verschlusselement (12A) nach einer Ablösung Zugang zu einem Hohlraum (19A) des äußeren Gehäuses (11A) ermöglicht;
einen Rahmen (20A), der in dem Hohlraum (19A) des äußeren Gehäuses (11A) eingerichtet ist, wobei der Rahmen (20A) die Energiequelle (60A) hält;
der Rahmen (20A) umfassend eine Blockierstruktur (50A) wie einen Ladespulenhalter, die zwischen der Energiequelle (60A) und dem Verschlusselement (12A) entlang einer Energiequellenentnahmerichtung (R2) angeordnet ist;
wobei die Energiequelle (60A) einen ersten elektrischen Verbinder (61A), der nicht dauerhaft mit einem ersten elektrischen Verbinderpartner (40A) gekoppelt ist, und einen zweiten elektrischen Verbinder (63A), der nicht dauerhaft mit einem zweiten elektrischen Verbinderpartner gekoppelt ist, aufweist, wobei der erste elektrische Verbinderpartner (40A) und der zweite elektrische Verbinderpartner an dem Rahmen (20A) befestigt sind;
wobei der Rahmen (20A) für eine Entnahme aus dem Hohlraum (19A) des äußeren Gehäuses (11A) entlang einer Rahmenentnahmerichtung (R1) arrangiert ist, wenn das Verschlusselement (12A) abgelöst ist; und
die Blockierstruktur (50A) umfassend wenigstens einen Haltearm (58A) mit einem Halsabschnitt (59A), der für einen Trennschnitt bereitgestellt ist, sodass die Blockierstruktur (50A) nach dem Trennschnitt weggebogen werden kann, um ein Entnehmen der Energiequelle (60A) aus dem Rahmen (20A) zu erlauben;
**dadurch gekennzeichnet, dass** der Halsabschnitt (59A) wenigstens zwei einander entgegengesetzte nutartige Strukturen (591A, 592A) zum Führen eines Werkzeugs zum Durchführen des Trennschnitts umfasst.

2. Körperpflegevorrichtung nach Anspruch 1, wobei der Halsabschnitt (59A) drei nutartige Strukturen umfasst.

3. Körperpflegevorrichtung nach einem der Ansprüche 1 oder 2, wobei die Querschnittsfläche des Halsabschnitts (59A) unter etwa 4 mm² liegt und das Material des wenigstens einen Haltearms (58A) ein Thermoplast ist.

4. Körperpflegevorrichtung nach einem der Ansprüche 1 bis 3, wobei der erste elektrische Verbinderpartner (40A) ein Metallblechelement ist, das an dem Rahmen (20A) befestigt ist.

5. Körperpflegevorrichtung nach Anspruch 4, wobei das Metallblechelement (40A) einen Metallkarabinerhaken (45A) aufweist, der das Metallblechelement (40A) an dem Rahmen (20A) verriegelt.

6. Körperpflegevorrichtung nach Anspruch 4 oder 5, wobei das Metallblechelement (40A) wenigstens einen gefederten Kontaktarm (421A; 422A) und wenigstens eine noppenartige oder kuppelartige Kontaktstruktur (420A) aufweist.

7. Körperpflegevorrichtung nach einem der Ansprüche 1 bis 6, wobei der zweite elektrische Verbinder (63A) als wenigstens ein gefederter Arm (64A) ausgeführt ist, speziell als eine Vielzahl von gefederten Armen (64A), insbesondere wobei der wenigstens eine gefederte Arm (64A) den zweiten elektrischen Verbinderpartner in einer Richtung senkrecht zu der Energiequellenentnahmerichtung (R2) kontaktiert.

8. Körperpflegevorrichtung nach Anspruch 7, wobei der wenigstens eine gefederte Arm (64A) wenigstens eine noppenartige Kontaktstruktur (641A) aufweist, die mit dem zweiten elektrischen Verbinderpartner in Kontakt steht.

9. Körperpflegevorrichtung nach Anspruch 6 oder 7, wobei der zweite elektrische Verbinderpartner eine Kontaktfläche wie eine vergoldete leitfähige Schicht ist.

10. Körperpflegevorrichtung nach einem der Ansprüche 1 bis 9, wobei der erste elektrische Verbinder (61A) und/oder der zweite elektrische Verbinder (63A) mit einem Fett, insbesondere einem leitfähigen Fett, beschichtet ist.

11. Körperpflegevorrichtung nach einem der Ansprüche 1 bis 10, wobei der erste elektrische Verbinder (61A) den ersten elektrischen Kontaktpartner (40A) in einer Längsverlängerungsrichtung der Energiequelle (60A) kontaktiert und der zweite elektrische Verbinder (63A) den zweiten elektrischen Kontaktpartner in einer Richtung senkrecht zu der Längsverlängerungsrichtung kontaktiert, sodass die zwei Kontaktierungsrichtungen etwa 90 Grad auseinanderliegen.

12. Körperpflegevorrichtung nach einem der Ansprüche 1 bis 11, wobei das Verschlusselement (12A) für die Ablösung von dem äußeren Gehäuse (11A) durch eine rotierende Bewegung in Bezug auf das äußere Gehäuse (11A) arrangiert ist und das Verschlusselement (12A) und das äußere Gehäuse (11A) durch wenigstens ein in Eingriff stehendes Paar aus Vorsprung (121A) und Aufnahme (111A) aneinander verriegelt sind, speziell wobei der Vorsprung (121A) eine Abschrägung (1211A) aufweist und die Aufnahme (111A) eine zusammenwirkende Abschrägung (1111A) aufweist, um die Ablösung in der Richtung (R3) der rotierenden Bewegung zu unterstützen.

## Revendications

1. Dispositif de soins personnels (1A) ayant une source d'énergie (60A) agencée pour être amovible, le dispositif de soins personnels (1A) comprenant :
un boîtier externe (11A) ayant un élément de fermeture détachable (12A) au niveau d'une extrémité, l'élément de fermeture détachable (12A) permettant l'accès à une cavité (19A) du boîtier externe (11A) après détachement ;
un châssis (20A) disposé dans la cavité (19A) du boîtier externe (11A), le châssis (20A) maintenant la source d'énergie (60A) ;
le châssis (20A) comprenant une structure de blocage (50A) telle qu'un support de bobine de charge positionné entre la source d'énergie (60A) et l'élément de fermeture (12A) le long d'une direction de retrait de source d'énergie (R2) ;
la source d'énergie (60A) ayant un premier connecteur électrique (61A) couplé de manière non permanente à un premier partenaire de connecteur électrique (40A) et un second connecteur électrique (63A) couplé de manière non permanente à un second partenaire de connecteur électrique, le premier partenaire de connecteur électrique (40A) et le second partenaire de connecteur électrique étant fixés au niveau du châssis (20A) ;
le châssis (20A) étant agencé pour être retiré de la cavité (19A) du boîtier externe (11A) le long d'une direction de retrait de châssis (R1) lorsque l'élément de fermeture (12A) est détaché ; et
la structure de blocage (50A) comprenant au moins un bras de support (58A) avec une section de col (59A) prévue pour une coupe de séparation de sorte que la structure de blocage (50A) puisse être écartée par flexion après la coupe de séparation pour permettre le retrait de la source d'énergie (60A) du châssis (20A) ;
**caractérisé en ce que** la section de col (59A) comprend au moins deux structures opposées en forme de rainure (591A, 592A) pour guider un outil permettant d'effectuer la coupe de séparation.

2. Dispositif de soins personnels selon la revendication 1, dans lequel la section du col (59A) comprend trois structures en forme de rainure.

3. Dispositif de soins personnels selon l'une de la revendication 1 ou de la revendication 2, dans lequel l'aire de section transversale de la section de col (59A) est inférieure à environ 4 mm² et le matériau de l'au moins un bras de support (58A) est un thermoplastique.

4. Dispositif de soins personnels selon l'une des revendications 1 à 3, dans lequel le premier partenaire de connecteur électrique (40A) est un élément en feuille métallique qui est fixé au niveau du châssis (20A).

5. Dispositif de soins personnels selon la revendication 4, dans lequel l'élément en feuille métallique (40A) a un crochet d'encliquetage métallique (45A) verrouillant l'élément en feuille métallique (40A) au niveau du châssis (20A).

6. Dispositif de soins personnels selon la revendication 4 ou la revendication 5, dans lequel l'élément en feuille métallique (40A) a au moins un bras de contact à ressort (421A ; 422A) et au moins une structure de contact en forme de bossage ou de dôme (420A).

7. Dispositif de soins personnels selon l'une des revendications 1 à 6, dans lequel le second connecteur électrique (63A) est réalisé en tant qu'au moins un bras à ressort (64A), spécifiquement sous la forme d'une pluralité de bras à ressort (64A), en particulier où l'au moins un bras à ressort (64A) vient en contact avec le second partenaire de connecteur électrique dans une direction perpendiculaire à la direction de retrait de source d'énergie (R2).

8. Dispositif de soins personnels selon la revendication 7, dans lequel l'au moins un bras à ressort (64A) a au moins une structure de contact en forme de bossage (641A) qui est en contact avec le second partenaire de connecteur électrique.

9. Dispositif de soins personnels selon la revendication 6 ou la revendication 7, dans lequel le second partenaire de connecteur électrique est une surface de contact telle qu'une couche conductrice plaquée or.

10. Dispositif de soins personnels selon l'une des revendications 1 à 9, dans lequel le premier connecteur électrique (61A) et/ou le second connecteur électrique (63A) sont revêtus d'une graisse, en particulier d'une graisse conductrice.

11. Dispositif de soins personnels selon l'une des revendications 1 à 10, dans lequel le premier connecteur électrique (61A) vient en contact avec le premier partenaire de contact électrique (40A) dans une direction d'extension longitudinale de la source d'énergie (60A) et le second connecteur électrique (63A) vient en contact avec le second partenaire de contact électrique dans une direction perpendiculaire à la direction d'extension longitudinale de sorte que les deux directions de contact soient distantes d'environ 90 degrés.

12. Dispositif de soins personnels selon l'une des revendications 1 à 11, dans lequel l'élément de fermeture (12A) est agencé pour se détacher du boîtier externe (11A) par un mouvement de rotation par rapport au boîtier externe (11A) et l'élément de fermeture (12A) et le boîtier externe (11A) sont verrouillés l'un à l'autre par au moins une paire constituée d'une saillie en prise (121A) et d'un réceptacle 111A), en particulier où la saillie (121A) a un chanfrein (1211A), et le réceptacle (111A) a un chanfrein coopérant (1111A) pour faciliter le détachement dans la direction de mouvement de rotation (R3).
